# NEUE EUROPÄISCHE PATENTSCHRIFT

(11) **EP 1 303 567 B2**
(45) Veröffentlichungstag und Bekanntmachung des Hinweises auf die Entscheidung über den Einspruch: **05.09.2007**
(45) Hinweis auf die Patenterteilung: 08.12.2004
(21) Anmeldenummer: 01942942.2
(22) Anmeldetag: 02.07.2001
(51) Int. Cl.: C08L 63/00

(54) **VOLUMENMODIFIZIERTE VERGUSSMASSEN AUF DER BASIS POLYMERER MATRIXHARZE**
VOLUME-MODIFIED CASTING COMPOUNDS BASED ON POLYMERIC MATRIX RESINS
MASSE DE REMPLISSAGE A MODIFICATION DE VOLUME A BASE DE RESINE A MATRICE POLYMERE

(30) Priorität: 14.07.2000 EP 00810620
(43) Veröffentlichungstag der Anmeldung: 23.04.2003
(73) Patentinhaber: ABB RESEARCH LTD., 8050 Zürich (CH)
(72) Erfinder: HUCKE, Thomas, 01217 Dresden (DE); ROCKS, Jens, CH-8057 Zürich (CH); KALTENBORN, Uwe, CH-5405 Baden-Dättwil (CH)
(74) Vertreter: ABB Patent Attorneys
(86) Internationale Anmeldenummer: PCT/CH2001/000409
(87) Internationale Veröffentlichungsnummer: WO 2002/006398

(56) Entgegenhaltungen:
- EP-A- 0 230 619
- EP-A- 0 266 513
- EP-A- 0 553 371
- EP-A- 0 685 508
- WO-A-98/32138
- DE-A- 3 738 634

## Beschreibung

### Geltungsbereich

Die vorliegende Erfindung betrifft volumenmodifizierte Vergussmassen auf der Basis duroplastischer Epoxidharze, mit verbesserter Hydrophobie, welche für die Herstellung von elektrischen Isolierungen geeignet sind. Mit den erfindungsgemässen Vergussmassen ist es möglich, elektrische Isolierungen, insbesondere in Form von Formteilen und Beschichtungen auf dem Gebiet der Hochspannungsisolierungen, herzustellen, welche auch für den Freilufteinsatz geeignet sind.

### Technisches Gebiet

Isolierung auf Basis polymerer Matrixharze für den Freilufteinsatz sind an sich bekannt. Für Freiluftanwendungen werden traditionell Isolatoren auf Basis von Glas und keramischen Materialien eingesetzt. In den letzten Jahren konnten polymere Isolierstoffe ebenfalls einen stetig steigenden Marktanteil erringen, wobei häufig Giessharzsysteme auf der Basis von Epoxidharzen und Polyurethanen eingesetzt werden. Im Bereich des Schaltanlagenbaus besitzen Epoxidharze als Isoliermaterialien eine wesentliche Bedeutung. Ebenso finden solche Epoxidharzsysteme weitere Anwendungen als Isoliermaterialien in der Herstellung von Messwandlern, Durchführungen, Leistungsschaltern, Trockentransformatoren, elektrischen Maschinen, in der Leistungselektronik, der Mikroelektronik sowie in der Automatisierungstechnik. Im Bereich der Energieübertragung und der Energieverteilung sind vor allem Anwendungen im Innenraum bekannt, vereinzelt gibt es auch Anwendungen auf dem Gebiet der Freiluftisolierungen.

Mit der erfindungsgemässen Zusammensetzung wird es möglich, Hydrophobie in ausgezeichneter Weise als intrinsische Eigenschaft in Epoxidharze einzubauen. Damit wird es möglich, Formteile aus solchen modifizierten Epoxidharzen herzustellen und unter Freiluftbedingungen einzusetzen, wo heute deutlich teurere Elemente aus Silikon-Verbundwerkstoffen eingesetzt werden. Durch die hervorragenden mechanischen Eigenschaften des erfindungsgemässen Epoxidsystems kann dieses sowohl als Konstruktionswerkstoff als auch als Isolierstoff eingesetzt werden, ohne dass dabei die Möglichkeiten der Formgebung beschränkt sind.

Epoxidharze werden heute in der Elektrotechnik sehr vielfältig eingesetzt. Im Bereich der Mittelspannungs- und Hochspannungstechnik sind Epoxidharze in erster Linie als Isolierstoffe zu finden. Da ein breites Angebot von verschiedenen Isolierstoffen mit sehr guten elektrischen Eigenschaften besteht, werden die Hauptanforderungen hinsichtlich der Einsatzfähigkeit von Isolierstoffen nicht an die elektrische Durchschlagsfestigkeit, sondern an die mechanischen Eigenschaften gestellt. Die Auswahl eines Isolierstoffes erfolgt deshalb vermehrt nach zusätzlichen Kriterien wie mechanische Festigkeit, mechanische Flexibilität, Beständigkeit gegen UV-Strahlung, Verarbeitbarkeit und Formenvielfalt, Teilentladungsfreiheit, Kriechstromfestigkeit, Fremdschichtverhalten und Wartungsfreiheit sowie Resistenz gegen komplexe elektrische und klimatische Belastungen bei hoher Luftfeuchtigkeit.

Epoxidharz-Vergussmassen bestehen in der Regel aus den Komponenten Epoxidharz, Härter, Beschleuniger, Füllstoff und Farbstoff. Insbesondere durch die Modifikation des Epoxidharz/Härter-Gemisches wurden die mechanischen Eigenschaften optimiert. Mit der Entwicklung cycloaliphatischer Harze wurden auch UV-beständige Formstoffe bereit gestellt. Eine sehr gute Verarbeitbarkeit und das Vergiessen äusserst komplizierter und/oder grosser Formen lassen sich durch die thermische Steuerung der Aushärtungsreaktion, wie auch durch den Einsatz ausgewählter Härter und Beschleuniger erreichen. In Verbindung mit Verarbeitungsmethoden, wie dem Vakuumverguss oder dem Druck-Gelierverfahren, gelingt es zudem, homogene Werkstücke ohne Gaseinschlüsse herzustellen und somit die Teilentladungsfreiheit zu gewährleisten.

Im Vergleich mit den klassischen festen Isolierstoffen Keramik und Glas treten jedoch bei polymeren Isolierstoffen bei Entladungen entlang der Oberfläche Kriechspuren auf. Die durch den differentiellen Eintrag hoher Energien bewirkte - meist unvollständige - Oxidation der Polymermatrix führt zur Konzentration von leitfähigem, graphitischem Kohlenstoff an der Oberfläche. Dies wiederum verursacht den Verlust der isolierenden Wirkung des Materials. Ein wesentlicher Fortschritt zur Verbesserung der Kriechstromfestigkeit wurde mit dem Einsatz von anorganischen Füllstoffen erreicht. So sind derzeit Harzsysteme mit einem Füllgrad von bis zu 70% bekannt, wobei als bevorzugte Füllstoffe SiO₂, Al₂O₃, CaMg(CO₃)₂ (Dolomit) zum Einsatz kommen.

Trotz dieser guten Eigenschaften ist der Einsatz von Epoxidharz als elektrisches Isoliermaterial im wesentlichen auf den Innenraum im Schaltanlagenbau beschränkt geblieben, wobei dies in erster Linie dem ungenügenden Fremdschicht- und Trackingverhalten sowie der ungenügenden Wartungsfreiheit zuzuschreiben ist. Der wesentliche Aspekt dabei ist die geringe Widerstandsfähigkeit gegenüber der komplexen elektrischen und klimatischen Belastung. Untersuchungen haben gezeigt, dass es selbst bei Innenraumanlagen zum Versagen von Isolierteilen kommen kann. Ist beispielsweise die Oberfläche des Epoxidharzes von einer Fremdschicht belegt und kann eine Betauung nicht ausgeschlossen werden, so können im Innenraum partiell Belastungen auftreten, die deutlich über denen von Freiluftanlagen liegen und somit verstärkt zum Versagen führen. Tritt eine solche Belastung durch Betauung der Oberfläche auf, so ist die isolierende Wirkung wesentlich von der wasserabweisenden Wirkung (Hydrophobie) der betauten Oberfläche abhängig. Bei stark hydrophoben Oberflächen, wie sie z.B. bei Silikonen auftreten, bilden sich Taubeläge als einzelne, voneinander getrennte Tröpfchen aus. Bei hydrophilen Oberflächen hingegen kommt es bei der Benetzung zur Ausbildung eines Filmbelags, der zu einem Überschlag des Isolators führen kann.

Aufgrund des polaren Charakters von Epoxidharzen sind bei Epoxidharzoberflächen keine hydrophoben Eigenschaften zu erwarten. Zwar kann auf technischen Epoxidharzoberflächen eine gewisse Hydrophobie nachgewiesen werden. Diese ist jedoch nicht intrinsisch, sondern wird in der Regel durch den verwendeten Füllstoff und dessen Vorbehandlung sowie durch die Verwendung von Silikon enthaltenden Formtrennmitteln hervorgerufen. Eine mittel- oder langfristige Nutzung dieser hydrophoben Eigenschaften ist nicht möglich, da diese nur eine äusserst geringe Beständigkeit gegen Umwelteinflüsse aufweisen.

### Stand der Technik

Um eine Verbesserung der genannten Eigenschaften von Epoxidharzoberflächen, insbesondere deren Hydrophobie, zu erreichen, wird im US-Patent Nr. 3,843,577 die Addition von Organopolysiloxanölen zum Epoxidharz vorgeschlagen. Die Silikonöle werden in das Epoxidharz vor dem Verguss dispergiert und liegen nach der Aushärtung wieder frei in der Matrix vor. Dies hat, insbesondere bei hohen Befüllungsgraden, diverse mechanische und elektrische Nachteile. Die Hydrophobie ist nicht intrinsisch im Material verankert, wobei mit einer Entmischung der Bestandteile zu rechnen ist.

In der W098/32138 wird vorgeschlagen, dem Epoxidharz eine flüssige verhältnismässig niedermolekulare oligomere Siloxanverbindung zuzusetzen, welche mit Epoxidgruppen versehen ist. Damit gelingt es zwar, diese Siloxanverbindung im Härtungsprozess chemisch in die Epoxidmatrix einzubauen. Es hat sich jedoch gezeigt, dass die Zugabe des niedermolekularen Silikonöls alleine, trotz der möglichen chemischen Einbindung in die Epoxidmatrix, bei den in der Praxis zu verwendenden Mengen zur Schaffung einer flüssigen Phase im Harzsystem führt. Dabei kommt es zur Bildung von Mikro-Voids, welche zur Verminderung der mechanischen Festigkeit und der elektrischen Eigenschaften, beispielsweise der Durchschlagsspannung, führen.

EP 0 685 508 betrifft eine Vielzahl härtbarer Harze, u.a. auch Epoxidharze, welche ein vernetztes Organopolysiloxan enthalten, welches an der Oberfläche mit einem definiertem amorphen Silica verbunden ist und besondere mechanische Eigenschaften aufweisen.

EP-A-0 266 513 betrifft ein härtbares Reaktionsharz, welches ein dreidimensional vernetztes Polyorganosiloxan enthält. Dieses wird beispielsweise hergestellt, indem man einem Epoxidharz eine Kombination von polymerisierbaren monomeren Ausgangsverbindungen zusetzt, welche sämtliche miteinander polymerisieren.

EP-A-0 230 619 betrifft eine Dispersion enthaltend (a) ein Epoxidharz, (b) ein funktionelles lineares Polydimethylsiloxan und (c) ein Copolymer eines Polyalkylenoxids mit einer Verbindung, die aus SiO₂-Einheiten und (CH₃)₃SiO_{1/2}-Resten besteht.

EP 0 553 371 betrifft ein Epoxidharz, welches ein polymeres Siloxan enthält, das mit einer Komponente des Epoxidharzes polymerisiert wird. Dieses polymere Siloxan wird durch Additionspolymerisation eines Silans (mit ≡SiH-Gruppen) mit einem Vinylsilan in Gegenwart eines Additionskatalysators, z.B. eines Platinsalzes, in der Epoxidharzkomponente *in situ* hergestellt.

DE 37 38 634 betrifft eine Epoxidharzmasse mit erhöhter Reissfestigkeit und Zähigkeit, welche Silikonharzteilchen enthält. Dabei wird eine Mischung von Monomeren reaktiven Silikonverbindungen mit einem Silanolgruppen enthaltenden Polysiloxan *in situ* polymerisiert.

### Darstellung der Erfindung

Es wurde nun gefunden, dass die oben beschriebenen Nachteile erheblich vermindert oder behoben werden, wenn man der härtbaren Epoxidmatrix, welche in der Regel aus einem Epoxidharz, einem Härter, gegebenenfalls einem Beschleuniger sowie weiteren Additiven wie Füllstoffe, Flexibilisatoren und Farbstoffe, besteht, (a) ein dreidimensional vernetztes Polysiloxan in disperser Form und mit einer Teilchengrösse im Bereich von 0.02 µm bis 50 µm, welches gegebenenfalls reaktive Gruppen enthält, die mit dem Epoxidharz und/oder dem Härter chemisch zu reagieren vermögen, sowie (b) eine ausgewählte lineare oder verzweigte Siloxanverbindung, welche reaktive Gruppen enthält, die mit dem Epoxidharz und/oder dem Härter chemisch zu reagieren vermögen, zusetzt. Mit einer derart erhaltenen Zusammensetzung werden überraschenderweise insbesondere erheblich verbesserte Ergebnisse hinsichtlich der Grundhydrophobie als auch hinsichtlich der Hydrophobieerholung nach einer Zerstörung der Hydrophobie durch äussere Teilentladungen, erzielt. Insbesondere sind die Ergebnisse erheblich besser im Vergleich zu Zusammensetzungen, welche jeweils nur ein dreidimensional vernetztes Polysiloxan in disperser Form oder nur eine ausgewählte lineare oder verzweigte siloxanverbindung, welche reaktive Gruppen enthält, die mit dem Epoxidharz zu reagieren vermögen, enthalten. Eine deutlich synergistische Wirkung zeigt sich hinsichtlich der mechanischen und elektrischen Eigenschaften.

Die vorliegende Erfindung ist in den Patentansprüchen definiert.

Die erfindungsgemässe Vergussmasse ist sowohl für die Verwendung als Konstruktionswerkstoff als auch als Isoliermaterial geeignet, insbesondere für die Herstellung von Formteilen und Beschichtungen auf dem Gebiet der elektrischen Isolierungen, beispielsweise Hochspannungsisolierungen, insbesondere für den Freilufteinsatz.

In diesem Sinne betrifft die vorliegende Erfindung die Verwendung der erfindungsgemässen Vergussmasse als Konstruktionswerkstoff als auch als Isoliermaterial, für die Herstellung von Formteilen und Beschichtungen auf dem Gebiet der elektrischen Isolierungen, insbesondere Hochspannungsisolierungen, insbesondere Hochspannungsisolierungen für den Freilufteinsatz.

Die Erfindung betrifft im weiteren die aus den erfindungsgemässen Vergussmasse hergestellten Konstruktionsteile und elektrischen Isolierungen.

Die Erfindung betrifft im weiteren ein Verfahren zur Herstellung der erfindungsgemässen Vergussmassen.

Dreidimensional vernetzte disperse Polysiloxane mit einer durchschnittlichen Teilchengrösse im Bereich von 0.02 µm bis 50 µm, sind aus der DE 36 34 084 oder aus der EP 0 407 834 bekannt. Die in der vorliegenden Erfindung verwendete Komponente (a) entspricht vorzugsweise den dreidimensional vernetzten Silikonen bzw. den Silikonharzdispersionen, welche in der DE 36 34 084 oder der EP 0 407 834 beschrieben sind.

Die Komponente (a), das heisst das dreidimensional vernetzte Polysiloxan in disperser Form, wird vorzugsweise separat als Polysiloxandispersion, bestehend aus einer äusseren Phase und einer dispersen Phase, hergestellt und der Epoxid-Vergussmasse oder einer Komponenten derselben vor deren Verarbeitung bzw. vor deren Härtung zugesetzt. Die Herstellung von solchen Dispersionen ist an sich bekannt.

Die äussere Phase der zu verwendenden Polysiloxandispersion besteht vorzugsweise zu etwa 25 bis 99,9 Gew.-% aus einem bei Temperaturen von 20°C bis 100°C flüssigen monomeren oder polymeren Polyol, aus einem linearen oder verzweigten Polyglykolether, aus einem Polyester auf der Basis von Polyolen und aliphatischen, cycloaliphatischen oder aromatischen Dicarbonsäuren, aus Acrylatpolymeren oder Methacrylatpolymeren sowie entsprechende Copolymeren, oder einem Gemisch solcher Verbindungen, wie solche als Härter in Epoxidharzsystemen bekanntermassen einsetzbar sind.

Für die äussere Phase verwendbar sind insbesondere lineare oder verzweigte aliphatische Polyole wie beispielsweise Ethylenglycol, Diethylenglycol, die Propylenglycole, Butylenglycole, 1,2-Butandiol, 1,3-Butandiol, 1,4-Butandiol, Neopentylglycol, Isopentylglycol, 1,6-Hexandiol, Glycerin, Hexantriol, Trimethylolethan, Trimethylolpropan, Erythrit, Pentaerythrit, Cyclohexandiol oder 1,4-Dimethylolcyclohexan.

Als äussere Phase verwendbar sind auch Reaktionsprodukte der genannten Polyole mit aliphatischen, cycloaliphatischen oder aromatischen Dicarbonsäuren, oder auch Tricarbonsäuren, wie solche an sich für die Verwendung als Härter in Epoxidvergussmassen bekannt sind. Solche, Carboxylgruppen enthaltende, Polyesterpolymere weisen bevorzugt eine Säurezahl (angegeben in mg KOH/g Polyester) von 10 bis 100 auf. Die Polyester haben zweckmässigerweise eine Glasübergangstemperatur im Bereich von 20 bis 100°C und sind vorzugsweise Kondensationsprodukte von Polyolen mit Dicarbonsäuren und gegebenenfalls polyfunktionellen Carbonsäuren oder den entsprechenden Carbonsäureanhydriden. Geeignete Polyole sind oben genannt. Als Carbonsäuren geeignet sind z.B. Isophthalsäure, Terephthalsäure, Phthalsäure, Methylphthalsäuren, Tetrahydrophthalsäure, Hexahydrophthalsäure, Methyltetrahydrophthalsäuren, z.B. 4-Methyltetrahydrophthalsäure, Cyclohexandicarbonsäuren, Bernsteinsäure, Glutarsäure, Adipinsäure, Pimelinsäure, Suberinsäure, Azelainsäure, Sebacinsäure, Dodecandicarbonsäure, Fumarsäure, Maleinsäure oder 4,4'-Diphenyldicarbonsäure. Häufig basieren kommerziell verfügbare Polyester auf Neopentylglycol und/oder Trimethylolpropan als wesentliche alkoholische Bestandteile sowie auf Adipinsäure und/oder Terephthalsäure und/oder Isophthalsäure und/oder Trimellitsäure als wesentliche Säurekomponenten.

Die disperse Phase der zu verwendenden Polysiloxandispersion besteht vorzugsweise zu etwa 0,1 bis 75 Gew.-% aus einem oder mehreren dreidimensional vernetzten, d.h. quervernetzten, Polyorganosiloxanen, wobei die vernetzten Polyorganosiloxan-Teilchen einen mittleren Durchmesser von 0.02 µm bis 50 µm, vorzugsweise von 0.05 µm bis 10 µm, vorzugsweise von 0.07 µm bis 5 µm und vorzugsweise von 0.07 µm bis 1 µm aufweisen.

Im weiteren können diese Dispersionen bis zu 20 Gew.-% Additive, wie Lösungsmittel, Weichmacher, Katalysatoren, Vernetzungsmittel, Stabilisatoren, Dispergiermittel, enthalten. Solche Additive sind an sich bekannt.

Diese Polyorganosiloxanteilchen besitzen gegebenenfalls an ihrer Oberfläche reaktive Gruppen, über die sie an das Epoxidharz oder an die oben als äussere Phase beschriebenen Verbindungen chemisch angebunden werden können. Vorzugsweise wird bei der Herstellung der Dispersion eine äussere Phase verwendet, die anschliessend als Härter in der Epoxidvergussmasse eingesetzt werden kann. Die chemische Anbindung wird vorzugsweise während der Aushärtung der Vergussmasse vorgenommen. Falls eine chemische Anbindung an die äussere Phase möglich ist, so kann diese aber zumindest teilweise bereits vor der Zugabe zur Vergussmasse vorgenommen werden.

Eine sehr grosse Zahl von dreidimensional bzw. quervernetzten Organopolysiloxanen ist bekannt. Zumeist sind dies Dialkylpolysiloxane, vorzugsweise Dimethylpolysiloxane, wobei ein Teil der Alkylqruppen durch Phenyl und/oder an sich bekannte reaktive Gruppen ersetzt sein können. Als vernetzende Gruppen kommen vorzugsweise die folgenden Gruppen in Frage:

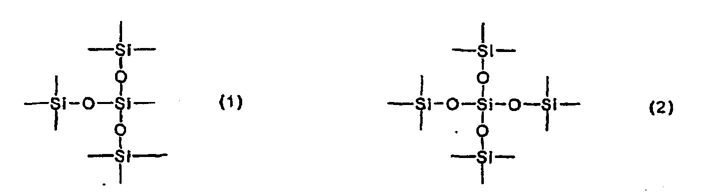

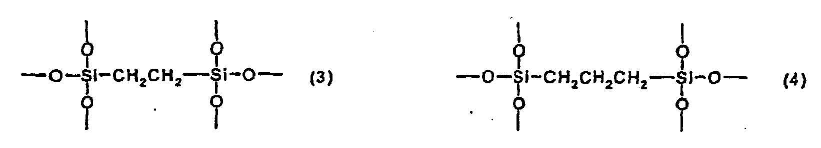

Die Vernetzung mittels solcher Gruppen ist an sich bekannt. Die Übergangsgruppe (3) entsteht beispielsweise bei der Vernetzungsreaktion eines Vinylsiloxans mit einem Hydrogensiloxan, während die Übergangsgruppe (4) bei der Vernetzungsreaktion eines Allylsiloxans mit einem Hydrogensiloxans, jeweils in Gegenwart eines geeigneten Katalysators, wie eines an sich bekannten Pt-Katalysators, gebildet wird.

Dabei sind die eingezeichneten freien Valenzen der Siliziumatome in den quervernetzten Siloxanen entweder an Sauerstoff oder Wasserstoff oder an organische einwertige, zweiwertige oder höherwertige Reste, welche gesättigt oder ungesättigt sein können und welche gegebenenfalls eine reaktive Gruppe tragen, gebunden. Bevorzugt sind einwertige Reste, die gleich oder verschieden sein können, und lineare oder verzweigte, gegebenenfalls chlorierte und/oder fluorierte Alkylgruppen mit 1 bis 8 C-Atomen darstellen, oder (C₁-C₄)-Alkylaryl oder Aryl; vorzugsweise gegebenenfalls fluoriertes Alkyl mit 1-4 C-Atomen oder Phenyl, vorzugsweise 3,3,3-Trifluoropropyl, Monofluoromethyl, Difluoromethyl oder Alkyl mit 1-4 C-Atomen, vorzugsweise Methyl oder Phenyl, vorzugsweise Methyl.

Ungesättigte Substituenten sind insbesondere Vinyl oder Allyl, wobei diese Substituenten in der Regel direkt an das Siliziumatom gebunden sind. Die reaktiven Gruppen sind vorzugsweise ausgewählt aus Glycidyl, Hydroxy, Amino (-NH₂), Carboxyl und/oder Wasserstoff, wobei diese jeweils je nach Art des Substituenten direkt oder über einen organischen Rest an das Silziumatom gebunden ist. Der Substituent Wasserstoff ist direkt an das Siliziumatom gebunden.

In diesem Sinne entspricht der Substituent, welcher eine reaktive Gruppe darstellt oder eine reaktive Gruppe trägt, vorzugsweise der allgemeinen Formel (a):

-(A)ᵣ-(reaktive Gruppe) (a),

worin
A einen zweiwertigen gesättigten oder ungesättigten alifatischen Rest, der ein oder mehrere Sauerstoffatome und/oder -NH-Gruppen oder Phenylen enthalten kann, einen zweiwertigen cycloalifatischen Rest, einen zweiwertigen aromatischen Rest, wobei jeweils an eine freie Valenz dieses zweiwertigen Restes eine reaktive Gruppe gebunden ist, bedeutet.

A als zweiwertiger gesättigter alifatischer Rest bedeutet vorzugsweise einen Rest der Formel -CₛH₂ₛ-, vorzugsweise -(CH₂)ₛ-, worin s eine ganze Zahl von 1 bis 6, vorzugsweise 1, 2 oder 3, und r Null oder 1, bedeutet.

Der Ausdruck "-(reaktive Gruppe)-" bedeutet vorzugsweise Wasserstoff, Vinyl oder Allyl, wobei diese Substituenten in der Regel direkt an das Siliziumatom gebunden sind (r = Null) oder Glycidyl, Hydroxy (-OH), Amino (-NH₂) und/oder Carboxyl, wobei Hydroxy direkt oder über den Linker A an das Silziumatom gebunden sein kann.

Bedeutet die -(reaktive Gruppe)- Glycidyl, so bedeutet der Rest der Formel (a) vorzugsweise einen 3-Glycidoxypropylrest bzw. das Siliziumatom an welches der 3-Glycidoxypropylrest gebunden ist, bildet vorzugsweise einen zweiwertigen Methyl-(3-Glycidoxypropyl)-siloxyrest.

A als zweiwertiger cycloalifatischer Rest bedeutet vorzugsweise Cyclohexylen; als zweiwertiger aromatischer Rest vorzugsweise Phenylen, vorzugsweise metha- oder para-Phenylen.

A als gesättigter oder ungesättigter alifatischer Rest, welcher durch Phenylen substituiert ist, wobei jeweils eine freie Valenz durch die reaktive Gruppe besetzt ist, bedeutet vorzugsweise -(CH₂)ₛ-(C₆H₄)-, wobei die reaktive Gruppe vorzugsweise an das Phenylen, vorzugsweise in metha- oder para-Stellung, gebunden ist. Bevorzugte Reste der Formel (a) sind beispielsweise auch: m-Aminophenyl oder p-Aminophenyl [H₂N-(C₆H₄)-], 3-(m-Aminophenoxy)-propyl [H₂N-(C₆H₄)-OCH₂CH₂CH₂-], 3-(2-Aminoethyl) aminopropyl [H₂NCH₂CH₂NH(CH₂)₃-], oder Hydroxymethyl [HO-CH₂-].

Die Methoden für die Herstellung solcher quervernetzter Siloxane und Siloxandispersionen sind an sich bekannt.

Vorzugsweise geht man so vor, dass man die als Ausgangsmaterialien einzusetzenden dreidimensional vernetzbaren Polyorganosiloxane, welche gegebenenfalls mit reaktiven Gruppen versehen sind, gegebenenfalls zusammen mit weiteren Hilfsstoffen, in der äusseren Phase dispergiert, vorzugsweise bei Temperaturen von 20 bis 100°C, und diese di sperse Phase soweit dispergiert, dass der mittlere Tröpfendurchmesser der dispergierten Teilchen/Tröpfchen im Bereich von 0.02 µm bis 50 µm liegt, und anschliessend die Komponenten der dispersen Phase unter Bildung fester Teilchen quervernetzt.

Die Teilchengrösse der dispergierten quervernetzten Polysiloxanteilchen, deren durchschnittliches Molekulargewicht, deren chemische Zusammensetzung, deren Viskosität und damit deren mechanische Eigenschaften, können vom Fachmann ohne weiteres variiert werden, um im Einzelfall die Eigenschaften zu optimieren.

Wichtig ist die Teilchengrösse und allenfalls die an der Teilchenoberfläche sich befindenden reaktiven Gruppen.

Bei der Herstellung der Dispersion ist der Anteil der dispersen Phase in der äusseren Phase, das heisst, die Konzentration der vernetzbaren Polyorganosiloxane in der äusseren Phase, nicht kritisch. Dies hängt vielmehr von effektiven Konzentrationsgrenze der dispersen Phase ab, wobei die Dispersion als "Masterbatch" zu betrachten ist, welche der Epoxid-Vergussmasse als Komponente zugesetzt wird. Die Dispersion kann z.B. von 0,1 Gew.-% bis 75 Gew.-% an dispergiertem Polysiloxan enthalten. Die Herstellung solcher Dispersionen ist an sich bekannt.

Eine sehr grosse Zahl von Vernetzungsreaktionen ist auf dem Gebiet der Silikonverbindungen bekannt. Dies ist bereits beschrieben worden und dem Fachmann bekannt. So kann man Vinylsiloxane mit Hydrogensilanverbindungen in Gegenwart von geeigneten Katalysatoren, z.B. Pt-Katalysatoren, mittels einer Additionsreaktion vernetzen. Man kann aber auch Silane mittels Alkoxysilanen kondensierend vernetzen oder Fremdverbindungen, wie Tetrabutyltitanat oder Zinn(II)octoat, verwenden.

Als Komponente (b), das heisst als lineare oder verzweigte Siloxanverbindung, welche reaktive Gruppen aufweist, kommt vorzugsweise eine fliessfähige Polyorganosiloxanverbindung in Frage, beispielsweise ein Polydimethylsiloxan, welches neben der reaktiven Gruppen gegebenenfalls weitere Substituenten wie Phenyl, Cyclohexyl, fluorierte und/oder chlorierte organische Substituenten, CHF-Einheiten, -CF₂-Einheiten, -CF₃-Einheiten, -CHCl-Einheiten, -C(Cl)₂-Einheiten und/oder -C(Cl)₃-Einheiten aufweist. Vorzugsweise hat die Verbindung der Komponente (b) eine Viskosität im Bereich von etwa 50 cSt bis 10'000 cSt, vorzugsweise im Bereich von 100 cSt bis 10'000 cSt und vorzugsweise im Bereich von 500 cSt bis 3'000 cSt, gemessen gemäss DIN 53 019 bei 20°C.

Es handelt sich bei der Komponente (b) um eine Verbindung, bzw. ein Verbindungsgemisch, der allgemeinen Formel (I) : 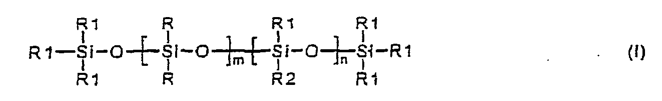 worin
- R: unabhängig voneinander einen linearen, verzweigten oder cyclischen, gegebenenfalls chlorierten und/oder fluorierten, Alkylrest mit 1 bis 8 Kohlenstoffatomen, (C₁-C₄)-Alkylaryl oder Aryl; vorzugsweise einen, gegebenenfalls fluorierten, Alkylrest mit 1 bis 4 Kohlenstoffatomen oder Phenyl; vorzugsweise Phenyl, 3,3,3-Trifluoropropyl, Monofluoromethyl, Difluoromethyl oder Alkyl mit 1-4 Kohlenstoffatomen; vorzugsweise Methyl;
- R₁: unabhängig voneinander eine der Bedeutungen von R oder R₂, wobei gegebenenfalls zwei an verschiedene Si-Atome gebundene endständige Substituenten R₁ zusammen genommen für ein Sauerstoffatom stehen (= cyclische Verbindung);
- R₂: eine der Bedeutungen von R oder einen Rest -(A)ᵣ-(reaktive Gruppe), worin -(A)ᵣ-(reaktive Gruppe) die oben angegebenen Bedeutungen hat;
- m: durchschnittlich von Null bis 5000, vorzugsweise von 20 bis 5000, vorzugsweise 50 bis 1500;
- n: durchschnittlich von Null bis 100, vorzugsweise 2 bis 100, vorzugsweise 2 bis 20;
bedeuten, wobei (i) die Verbindung der Formel (I) mindestens zwei reaktive Gruppen pro Molekül aufweist, (ii) die Summe von [m+n] für nicht-cyclische Verbindungen mindestens 20, vorzugsweise mindestens 50 beträgt und (iii) die Gruppen -[Si(R) (R)O]- und - [Si(R₁) (R₂)O]- in beliebiger Reihenfolge im Molekül angeordnet sind. Die Summe von [m+n] für nicht-cyclische Verbindungen liegt vorzugsweise durchschnittlich im Bereich von 20 bis 10000, vorzugsweise im Bereich von 50 bis 1500.

Das Verhältnis von Methyl zu Phenyl (für die Bedeutung von R) ist durch die Fliessfähigkeit der Verbindung bzw. des Verbindungsgemisches vorgegeben. Vorzugsweise bedeutet R Methyl. Die Verbindung der Formel (I) stellt in der Regel ein Gemisch von Verbindungen der Formel (I) dar, was dem Fachmann bekannt ist.

Die reaktiven Gruppen der Komponente (b) sind vorzugsweise dieselben wie diejenigen der Komponente (a). Ebenso hat der Linker - A- in der Komponente (b) vorzugsweise dieselbe Bedeutung wie in der Komponente (a). In diesem Sinne sind die bevorzugten reaktiven Gruppen der Komponente (b): 3-Glycidoxypropyl bzw. das Siliziumatom an welches der 3-Glycidoxypropylrest gebunden ist, bildet vorzugsweise einen zweiwertigen Methyl-(3-Glycidoxypropyl)-siloxyrest, m-Aminophenyl oder p-Aminophenyl, 3-(m-Aminophenoxy)-propyl, {3-(2-Aminoethyl)aminopropyl} und Hydroxymethyl.

Ist die Verbindung der Formel (I) eine cyclische Verbindung, so ist diese aus -[Si(R)(R)O]- und/oder -[SiR₁(R₂)O]-Einheiten zusammengesetzt, welche einen Ring mit 4 bis 12 solcher Einheiten bilden. Von den ringförmigen Siloxanen sind jedoch die ringförmigen oligomeren Polysiloxane mit 4 bis 8 Siloxy-Einheiten bevorzugt, wobei diese mindestens 2 reaktive Gruppen aufweisen.

Die gegebenenfalls anwesende niedermolekulare oligomere Siloxanverbindung ist eine Verbindung, welche (i) aus -[Si(R)(R)O]- Einheiten, welche endständig -OSi(R)₃-Gruppen bzw. -Si(R)₃-Gruppen aufweisen, zusammen gesetzt ist oder (ii) stellt eine cyclische Verbindungen der Formel [Si(R)(R)O]ₜ dar, worin t eine ganze Zahl von 4 bis 12, vorzugsweise 4 bis 8 bedeutet. Diese niedermolekulare oligomere Siloxanverbindung weist keine reaktiven Gruppen auf.

Die Summe der Komponente (a) und der Komponente (b) bezogen auf die gesamte Menge der erfindungsgemässen Vergussmasse beträgt vorzugsweise 0.1 Gew.-% bis 30 Gew.-%, vorzugsweise 0,5 Gew.-% bis 10 Gew.-% und insbesondere etwa 2 bis 5 Gew.-%.

Das Gewichtsverhältnis der Komponente (a) zur Komponente (b) ist vorzugsweise im Bereich von 5:1 bis 1:5 , vorzugsweise im Bereich von 5:1 bis 2:1, und beträgt vorzugsweise etwa 4,4:1.

Die Menge der niedermolekulare oligomere Siloxanverbindung beträgt vorzugsweise 0.1 Gew.-% bis 10 Gew.-%, vorzugsweise 0,5 Gew.-% bis 5 Gew.-% und insbesondere etwa 1 Gew.-%, bezogen auf das Gesamtgewicht der Mischung.

Die weiteren gegebenenfalls anzuwendenden Additive werden in an sich bekannten Mengen zugesetzt.

Für die Herstellung der erfindungsgemässen volumenmodifizierten Vergussmasse kann man die Basiskomponenten des härtbaren Epoxidharzes, das heisst das Epoxidharz, den Härter, den gegebenenfalls anwesenden Beschleuniger sowie die weiteren Additive wie Füllstoffe und Farbstoffe, in beliebiger Reihenfolge mischen. Dieser Mischung setzt man vor, während oder anschliessend an die Vermischung, die Dispersion der Komponente (a), das ist das dreidimensional vernetzte Polysiloxan in disperser Form, die Komponente (b), das ist die ausgewählte lineare oder verzweigte reaktive Gruppen enthaltende Siloxanverbindung, sowie gegebenenfalls die Komponente (c), das ist die niedermolekulare oligomere Siloxanverbindung, zu.

Vorzugsweise geht man so vor, dass man die Komponenten (a) und (b) in Abhängigkeit von ihren aktiven Gruppen entsprechend vormischt. Enthalten die Komponenten (a) und (b) Epoxidgruppen, so mischt man diese beiden Komponenten vorzugsweise mit dem Epoxidgruppen enthaltenden Epoxidharz, bevor man sie dann zur Herstellung der Vergussmasse verwendet. Enthalten die Komponenten (a) und (b) hingegen Hydroxyl, Amino oder Carboxyl, so mischt man diese Komponenten vorzugsweise mit dem Härter bevor man sie dann zur Herstellung der Vergussmasse verwendet.
In einzelnen Fällen ist es von Vorteil, zumindest einen Teil der Epoxidgruppen enthaltenden Komponenten (a) und (b) mit dem Härter vorzumischen und auch vorzuhärten oder zumindest einen Teil der Hydroxyl, Amino oder Carboxyl enthaltenden Komponenten (a) und (b) mit dem Epoxidharz vorzumischen und auch vorzuhärten. Dies wirkt sich positiv auf die Verteilung der Silikonkomponenten in der Vergussmasse und somit auf die physikalischen und mechanischen Eigenschaften des gehärteten Produktes aus.

Die Komponente (c) mischt man vorzugsweise zuerst mit der Komponente (a) und/oder (b) bevor man diese zur Herstellung der Vergussmasse verwendet.

Die erfindungsgemässen Vergussmassen in flüssiger oder pastöser Form sind duroplastisch härtbare Giessharzsysteme in Form von Epoxidharzen. Bevorzugt sind diejenigen mit guten elektrischen Eigenschaften, vorzugsweise aromatische und/oder cycloaliphatische Epoxidharze. Solche in der Elektroindustrie verwendeten Epoxidharze sind an sich aus der Literatur bekannt und können erfindungsgemäss verwendet werden. In der Elektroindustrie verwendbare Epoxidharze sind von verschiedenen Herstellern bekannt. Zahlreiche Publikationen existieren auch zu den elektrischen Araldit®-Giessharzsystemen der Ciba-Geigy AG.

Epoxidharze für elektrische Anwendungen enthalten in der Regel eine Glycidylverbindung oder ein Gemisch von Glycidylverbindungen und mindestens eine hydroxylhaltige Verbindung oder ein Gemisch solcher Verbindungen und/oder ein carboxylhaltiges Polymer, insbesondere einen carboxylterminierten Polyester und/oder ein carboxylhaltiges Acrylat- und/oder Methacrylatpolymer sowie gegebenenfalls einen Beschleuniger für die Vernetzungsreaktion der Glycidylverbindung oder Glycidylverbindungen mit der hydroxylhaltigen Verbindung und/oder dem carboxylhaltigen Polymeren sowie an sich übliche weitere Additive.

Bevorzugt sind vernetzend wirkende Glycidylverbindungen, welche mindestens zwei 1,2-Epoxidgruppen im Molekül aufweisen. Vorzugsweise verwendet man ein Gemisch von Polyglycidylverbindungen, beispielsweise ein Gemisch von Diglycidyl- und Triglycidylverbindungen. Solche Verbindungen sind an sich bekannt und in der Literatur ausführlich beschrieben. In der Regel kann aus den bekannten Glycidylverbindungen eine für die vorgesehene elektrische Anwendung geeignete Auswahl getroffen werden, was für den Fachmann ein Optimierungsproblem darstellt.

Geeignete Glycidylverbindungen sind beispielsweise in EP-A-0 297 030, EP-A-0 356 391, EP-A-0 462 053, EP-A-0 506 617, EP-A-0 536 085 oder in U.S. Patent US-A-3,859,314 oder in der DE-A-31 26 411 beschrieben. Diese umfassen Verbindungen, die unsubstituierte Glycidylgruppen und/oder mit Methylgruppen substituierte Glycidylgruppen aufweisen. Die Glycidylverbindungen haben vorzugsweise ein Molekulargewicht zwischen 200 und 1200, insbesondere zwischen 200 und 1000 und können fest oder flüssig sein. Ihr Epoxidgehalt beträgt vorzugsweise mindestens drei Äquivalente pro Kilogramm der Verbindung, vorzugsweise mindestens vier Äquivalente pro Kilogramm und insbesondere mindestens fünf Äquivalente pro Kilogramm. Bevorzugt sind Glycidylverbindungen, die Glycidylether- und/oder Glycidylestergruppen aufweisen. Eine Glycidylverbindung kann dabei auch beide Arten von Glycidylgruppen enthalten, wie z.B. 4-Glycidyloxy-benzoesäureglycidylester. Bevorzugt sind Polyglycidylester mit 1-4 Glycidylestergruppen, insbesondere Diglycidylester und/oder Triglycidylester. Die bevorzugten Diglycidylester leiten sich vorzugsweise von aromatischen, araliphatischen, cycloaliphatischen, heterocyclischen, heterocyclisch-aliphatischen oder heterocyclisch-aromatischen Dicarbonsäuren mit 6 bis 20, insbesondere 6 bis 12 Ringkohlenstoffatomen oder von aliphatischen Dicarbonsäuren mit 2 bis 10 Kohlenstoffatomen ab. Solche Verbindung sind beispielsweise unter dem Handelsnamen Araldit® (Ciba SC Ltd) kommerziell erhältlich. Bevorzugt sind beispielsweise die an sich bekannten Epoxidharze auf Basis mehrwertiger aromatischer oder cycloaliphatischer Hydroxylverbindungen. Auf Basis von aromatischen Hydroxylverbindungen sind beispielsweise die Glycidylether von Bisphenol A oder Bisphenol F sowie die Glycidylether von Phenol-Novolak-Harzen oder Kresol-Novolak-Harzen bekannt. Cycloaliphatische Epoxidharze sind z.B. bis-epoxidierter 1,2,3,6-Tetrahydrobenzoesäure-beta-1',2',3',6'-tetrahydrophenylethylester, Hexahydro-o-phthalsäurebis-glycidylester. Auch aliphatische Epoxidharze, wie z.B. 1,4-Butandioldiglycidylether, sind für die erfindungsgemässe Verwendung geeignet.

Als Härter zu verwendende hydroxylhaltige Verbindungen und/oder carboxylhaltige Polymere, insbesondere carboxylterminierte Polyester und/oder carboxylhaltige Acrylat- und/oder Methacrylatpolymere sowie gegebenenfalls zu verwendende Beschleuniger für die Vernetzungsreaktion der Glycidylverbindungen sowie an sich übliche weitere Additive sind an bekannt.

Bevorzugt kommen Vergussmassen zum Einsatz, welche mindestens einen Füllstoff enthalten. Solche Füllstoffe sind vorzugsweise Quarzmehl, Aluminiumoxid und/oder Dolomite in verschiedenen an sich bekannten Mahlungen. Die Füllstoffe sind bevorzugt mit einer Silanisierung versehen, um eine optimale chemische Anbindung der Partikel in der Harzmatrix zu gewährleisten.

Die erfindungsgemässen Vergussmassen werden insbesondere für die Herstellung von Hochspannungsisolierung für den Freilufteinsatz verwendet, insbesondere für die Herstellung von Freiluftisolatoren bei Hochspannungsleitungen als Langstab-, Verbund- und Kappenisolatoren sowie für Stützisolatoren im Mittelspannungsbereich. Die erfindungsgemässen Vergussmassen können auch in der Herstellung von Isolierungen bei Freiluft-Leistungschaltern, Messwandlern, Durchführungen und Ableitern, im Schaltanlagenbau, in Leistungsschaltern, Trockentransformatoren und elektrischen Maschinen, Verwendung finden. Im weiteren können die erfindungsgemässen Vergussmassen auch als Beschichtungsmaterialien für Transistoren und andere Halbleiterelemente und ganz allgemein zum Imprägnieren von elektrischen Bauteilen verwendet werden. Ebenso kann die erfindungsgemässe Vergussmasse als Korrosionsschutz für metallische Bauteile, z.B. für Brücken und Industrieanlagen, verwendet werden, wobei beispielsweise der Glanz der Schicht auch mit der Alterung nicht verloren geht.

Dabei wird das Formteil in einem Schritt oder in zwei oder mehreren Schritten hergestellt bzw. gegossen. So kann man zuerst einen Kern giessen, dessen Material keine erfindungsgemässe Vergussmasse enthält. In einem zweiten Giessschritt wird dann die fertige Form hergestellt, indem der Kern mit dem erfindungsgemässen Vergussmaterial überzogen wird. Dabei kann der Kern aus irgend einem geeigneten Material bestehen, beispielsweise auch aus einem faserverstärkten Kunststoff. Vorzugsweise wird als Kern ein Material verwendet, welches mit dem erfindungsgemässen Vergussmaterial kompatibel ist und insbesondere mit diesem eine chemische Bindung eingehen kann. Dies ist beispielsweise dann der Fall, wenn der Kern aus einem nicht modifizierten Giessharz und der Überzug aus einem erfindungsgemäss modifizierten Giessharz besteht. Im weiteren ist es möglich, dass das erfindungsgemässe Vergussmaterial auf einen Kern angegossen wird, und der Kern mit der Polymermatrix des Vergussmaterials keine chemische Bindung eingeht, dass aber aufgrund des Schrumpfdruckes des Vergussmaterials eine genügend starke mechanisch Verbindung zwischen dem Kern und dem angegossenen Teil entsteht.

Das folgenden Beispiel erläutert die Erfindung.

### Beispiel 1 (Herstellung der erfindungsgemässen Vergussmasse und von Prüfkörpern)

a) 11,1 Teile (Gewichtsteile) eines cycloaliphatischen Epoxidharzes (CY 184, Ciba-Geigy AG, Basel) werden mit 15,5 Teilen des Anhydridhärters HT 907 (Ciba-Geigy AG, Basel) sowie mit 11,1 Teilen einer Dispersion [Komponente (a)] eines cycloaliphatischen Epoxidharzes (äussere Phase), enthaltend ein dreidimensional vernetztes mit Epoxidgruppen versehenes Silkonharz (disperse Phase) in einer mittleren Teilchengrösse von 0.1µm bis 3µm (ALBIDUR EP 5340, hanse chemie GmbH, D-21502 Geesthacht, Deutschland), werden intensiv unter Verwendung eines Scherrührkopfes bei einer Rührgeschwindigkeit von 1400 Umdrehungen pro Minute und bei einer Temperatur von 50°C vermischt, wobei eine Dispersion, enthaltend das dreidimensional vernetzte Silikonharz, entsteht. Anschliessend wird bei etwa 100 mbar entgast.
b) Der unter a) erhaltenen Mischung werden nun 2 Teile eines viskosen epoxy-funktionalisierten Dimethylpolysiloxans [Komponente (b) (L-9300, Witco (Europe) S.A.)], enthaltend etwa 6 Gew.-% Octamethylcyclotetrasiloxan [Komponente (c)] unter den angegebenen Bedingungen (starkes Rühren, erhöhte Temperatur) zugegeben.
c) 0,3 Teile Beschleuniger (DY 062, Ciba-Geigy, Basel), 60 Teile silanisiertes Quarzmehl werden in einem Vakuum-Rührwerk (Zahnscheibenrührer) isotherm der unter b) erhaltenen Mischung zugefügt. Es wird während 10 Minuten bei 800 U/min bei einer Temperatur von 65°C vorgemischt. Dann wird bei 200 mbar entgast. Die Mischung wird nun mit dem unter b) erhaltenen Gemisch intensiv vermischt. Das erhaltene Giessharz wird in einem Rezipienten evakuiert und in einer auf 80°C heisse Giessform unter Vakuum vergossen. Nach einer Gelierzeit von 4 Stunden bei 80°C werden die Prüfkörper der Giessform entnommen und bei 140°C während 10 Stunden nachgehärtet. Dabei erhält man ein 4 mm dicke Platte, welche zu Prüfkörpern verarbeitet wird.

### Untersuchungsergebnisse

Testmethode für die Messung der Hydrophobie, des Hydrophobieerhalts und der Hydrophobiewiederkehr sowie Vergleichsresultate zwischen den (i) aus gehärtetem Giessharz ohne Zusatz der Komponenten (a) und (b), den (ii) aus gehärtetem Giessharz mit Zusatz der Komponenten (a)und (b) und den (iii) aus gehärtetem Giessharz mit Zusatz der Komponenten (a) hergestellten Prüfkörpern.

Zur Prüfung des elektrischen Verhaltens der Prüfkörper werden diese einer elektrischen Corona-Entladung während einer Zeitdauer von mindestens 24 Stunden, besser 48 Stunden ausgesetzt. Dabei wird vorübergehend die Oberflächenhydrophobie vermindert oder gänzlich zerstört, worauf anschliessend eine Hydrophobie-Erholung einsetzt. Die Hydrophobie wird in an sich bekannter Weise mit dem dynamischen Vorrückwinkel mit Wasser in Graden (°) gemessen. Je grösser der Vorrückwinkel, umso höher die Hydrophobie. In der Tabelle 1 sind die Werte der Grundhydrophobie, gemessen mit dem statischen Randwinkel in (°) angegeben. Die Tabellen 2, 3 und 4 zeigen die Hydrophobie-Erholung nach der Corona-Alterung. Alle drei Durchläufe der Alterung und Messung wurden an den gleichen Prüfkörpern durchgeführt.

Die gemessenen mechanischen Eigenschaften der beiden Prüfkörper sind im wesentlichen in vergleichbarer Grössenordnung und liegen in jedem Fall über den erforderlichen Gebrauchswerten.

**Tabelle 1**

| | Statischer Randwinkel (Wasser, in (°), Prüfkörper gemäss Versuch (i) | Statischer Randwinkel (Wasser, in (°), Prüfkörper gemäss Versuch(ii) | Statischer Randwinkel (Wasser, in (°), Prüfkörper gemäss Versuch(iii) |
|---|---|---|---|
| Grundhydrophobie | 77,5 | 90 | 87,5 |

**Tabelle 2**

| Erste Periode der Coronaalterung, Alterungszeit t=48 h | Dynamischer Vorrückwinkel (Wasser, in (°), Prüfkörper gemäss Versuch (i) | Dynamischer Vorrückwinkel (Wasser, in (°), Prüfkörper gemäss Versuch(ii) | Dynamischer Vorrückwinkel (Wasser, in (°), Prüfkörper gemäss Versuch(iii) |
|---|---|---|---|
| Hydrophobie direkt nach der Corona-Entladung | 0 | 0 | 0 |
| Hydrophobie nach 2 h | 40 | 45 | 40 |
| Hydrophobie nach 4 h | 40 | 55 | 45 |
| Hydrophobie nach 24 h | 45 | 58 | 47 |
| Hydrophobie nach 48 h | 47 | 62 | 50 |
| Hydrophobie nach 72 h | 49 | 69 | 50 |
| Hydrophobie nach 96 h | 50 | 69 | 50 |

**Tabelle 3**

| Zweite Periode der Coronaalterung | Dynamischer Vorrückwinkel (Wasser, in (°), Prüfkörper gemäss Versuch (i) | Dynamischer Vorrückwinkel (Wasser, in (°), Prüfkörper gemäss Versuch(ii) | Dynamischer Vorrückwinkel (Wasser, in (°), Prüfkörper gemäss Versuch(iii) |
|---|---|---|---|
| Hydrophobie direkt nach der Corona-Entladung | 0 | 0 | 0 |
| Hydrophobie nach 2 h | 35 | 45 | 40 |
| Hydrophobie nach 4 h | 35 | 45 | 45 |
| Hydrophobie nach 24 h | 38 | 59 | 47 |
| Hydrophobie nach 48 h | 39 | 62 | 50 |
| Hydrophobie nach 72 h | 45 | 69 | 50 |
| Hydrophobie nach 96 h | 45 | 70 | 50 |

**Tabelle 4**

| Dritte Periode der Coronaalterung | Dynamischer Vorrückwinkel (Wasser, in (°), Prüfkörper gemäss Versuch (i) | Dynamischer Vorrückwinkel (Wasser, in (°), Prüfkörper gemäss Versuch(ii) | Dynamischer Vorrückwinkel (Wasser, in (°), Prüfkörper gemäss Versuch(iii) |
|---|---|---|---|
| Hydrophobie direkt nach der Corona-Entladung | 0 | 0 | 0 |
| Hydrophobie nach 24 h | 30 | 45 | 32 |
| Hydrophobie nach 100 h | 33 | 55 | 40 |
| Hydrophobie nach 200 h | 38 | 60 | 40 |
| Hydrophobie nach 300 h | 40 | 66 | 41 |
| Hydrophobie nach 400 h | 40 | 70 | 43 |
| Hydrophobie nach 500 h | 40 | 70 | 45 |

## Patentansprüche

1. Volumenmodifizierte Vergussmasse auf der Basis eines härtbaren Epoxidharzes oder einer Mischung solcher Harze, welches/welche aus einem Epoxidharz, einem Härter, gegebenenfalls einem Beschleuniger sowie weiteren Additiven wie Füllstoffe, Flexibilisatoren und Farbstoffe, besteht/bestehen, **dadurch gekennzeichnet, dass** diese Vergussmasse:
(a) ein dreidimensional vernetztes Polysiloxan in disperser Form und mit einer Teilchengrösse im Bereich von 0.02 µm bis 50 µm, welches gegebenenfalls reaktive Gruppen aufweist, die mit dem Epoxidharz und/oder dem Härter chemisch zu reagieren vermögen, und
(b) eine lineare, verzweigte oder zyklische Polysiloxanverbindung, welche mindestens zwei reaktive Gruppen aufweist, die mit dem Epoxidharz und/oder dem Härter chemisch zu reagieren vermögen, und diese Polysiloxanverbindung der Komponente (b) eine Verbindung, bzw. ein Verbindungsgemisch, der allgemeinen Formel (I): 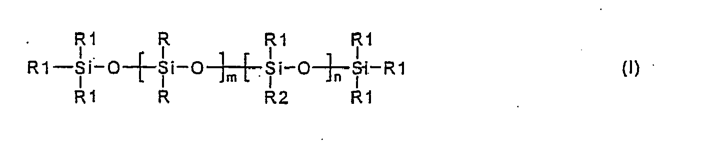 darstellt, worin
R unabhängig voneinander einen linearen, verzweigten oder cyclischen, gegebenenfalls chlorierten und/oder fluorierten, Alkylrest mit 1 bis 8 Kohlenstoffatomen, (C₁-C₄)-Alkylaryl oder Aryl; vorzugsweise einen, gegebenenfalls fluorierten, Alkylrest mit 1 bis 4 Kohlenstoffatomen oder Phenyl; vorzugsweise Phenyl, 3,3,3-Trifluoropropyl, Monofluoromethyl, Difluoromethyl oder Alkyl mit 1-4 Kohlenstoffatomen; vorzugsweise Methyl;
R₁ unabhängig voneinander eine der Bedeutungen von R oder R₂, wobei gegebenenfalls zwei an verschiedene Si-Atome gebundene endständige Substituenten R₁ zusammen genommen für ein Sauerstoffatom stehen (= cyclische Verbindung);
R₂ eine der Bedeutungen von R oder einen Rest -(A)ᵣ-(reaktive Gruppe), r=Null oder 1,
A (für r=1) einen zweiwertigen gesättigten oder ungesättigten alifatischen Rest, der ein oder mehrere Sauerstoffatome und/oder -NH-Gruppen oder Phenylen enthalten kann, einen zweiwertigen cycloalifatischen Rest, einen zweiwertigen aromatischen Rest, wobei jeweils an eine freie Valenz dieses zweiwertigen Restes eine reaktive Gruppe gebunden ist, und der Ausdruck "reaktive Gruppe" Wasserstoff, Vinyl oder Allyl, wobei diese Substituenten in der Regel direkt an das Siliziumatom gebunden sind (r = Null) oder Glycidyl, Hydroxy (-OH), Amino (-NH₂) und/oder Carboxyl, wobei Hydroxy direkt oder über den Linker A an das Silziumatom gebunden ist,
m durchschnittlich von Null bis 5000, vorzugsweise von 20 bis 5000, vorzugsweise 50 bis 1500;
n durchschnittlich von Null bis 100, vorzugsweise 2 bis 100, vorzugsweise 2 bis 20;
bedeuten, wobei (i) die Verbindung der Formel (I) mindestens zwei reaktive Gruppen pro Molekül aufweist, (ii) die Summe von [m+n] für nicht-cyclische Verbindungen mindestens 20, vorzugsweise mindestens 50 beträgt und die Komponente (b) eine cyclische Verbindung oder ein Gemisch cyclischer Verbindungen, der allgemeinen Formel (I) darstellt, welche aus 4 - 12 [Si(R)(R)O]- und/oder -[SiR₁(R₂)O] -Einheiten zusammengesetzt ist,
und diese Verbindung pro Molekül mindestens 2 reaktive Gruppen aufweist,
und (iii) die Gruppen -[Si(R)(R)O]- und -[Si(R₁)(R₂)O]- in beliebiger Reihenfolge im Molekül angeordnet sind.

2. Vergussmasse nach Anspruch 1, **dadurch gekennzeichnet, dass** das dreidimensional vernetzte Polysiloxan [Komponente (a)] separat als Polysiloxandispersion, bestehend aus einer äusseren Phase und einer dispersen Phase, hergestellt und der Epoxid-Vergussmasse oder einer Komponenten derselben vor deren Härtung zugesetzt wurde.

3. Vergussmasse nach Anspruch 2, **dadurch gekennzeichnet, dass** die äussere Phase der Polysiloxandispersion zu etwa 25 bis 99,9 Gew.-% aus einem bei Temperaturen von 20°C bis 100°C flüssigen monomeren oder polymeren Polyol, aus einem linearen oder verzweigten Polyglykolether, aus einem Polyester auf der Basis von Polyolen und aliphatischen, cycloaliphatischen oder aromatischen Dicarbonsäuren, aus Acrylatpolymeren oder Methacrylatpolymeren sowie entsprechende Copolymeren, oder einem Gemisch solcher Verbindungen besteht.

4. Vergussmasse nach Anspruch 3, **dadurch gekennzeichnet, dass** die äussere Phase aus mindestens einem linearen oder verzweigten aliphatischen Polyol, vorzugsweise Ethylenglycol, Diethylenglycol, einem Propylenglycol, einem Butylenglycol, 1,2-Butandiol, 1,3-Butandiol, 1,4-Butandiol, Neopentylglycol, Isopentylglycol, 1,6-Hexandiol, Glycerin, Hexantriol, Trimethylolethan, Trimethylolpropan, Erythrit, Pentaerythrit, Cyclohexandiol oder 1,4-Dimethylolcyclohexan, besteht.

5. Vergussmasse nach Anspruch 4, **dadurch gekennzeichnet, dass** die äussere Phase aus mindestens einem Reaktionsprodukt aus einem Polyol nach Anspruch 4 mit aliphatischen, cycloaliphatischen oder aromatischen Dicarbonsäuren oder Tricarbonsäuren, welche für die Verwendung als Härter in Epoxidvergussmassen geeignet sind.

6. Vergussmasse nach Anspruch 5, **dadurch gekennzeichnet, dass** diese Carboxylgruppen enthaltenden Reaktionsprodukte bzw. Polyesterpolymere eine Säurezahl (angegeben in mg KOH/g Polyester) von 10 bis 100 aufweisen.

7. Vergussmasse nach Anspruch 5, **dadurch gekennzeichnet, dass** diese Carboxylgruppen enthaltenden Reaktionsprodukte bzw. Polyesterpolymere eine Glasübergangstemperatur im Bereich von 20 bis 100°C aufweisen.

8. Vergussmasse nach einem der Ansprüche 5-7, **dadurch gekennzeichnet, dass** diese Carboxylgruppen enthaltenden Reaktionsprodukte bzw. Polyesterpolymere ein Kondensationsprodukt von einem Polyol gemäss Anspruch 5 und einer Dicarbonsäure und/oder polyfunktionellen Carbonsäure oder den entsprechenden Carbonsäureanhydriden darstellen, vorzugsweise ausgewählt aus der Gruppe enthaltend Isophthalsäure, Terephthalsäure, Phthalsäure, Methylphthalsäuren, Tetrahydrophthalsäure, Hexahydrophthalsäure, Methyltetrahydrophthalsäuren, vorzugsweise 4-Methyltetrahydrophthalsäure, Cyclohexandicarbonsäuren, Bernsteinsäure, Glutarsäure, Adipinsäure, Pimelinsäure, Suberinsäure, Azelainsäure, Sebacinsäure, Dodecandicarbonsäure, Fumarsäure, Maleinsäure oder 4,4'-Diphenyldicarbonsäure.

9. Vergussmasse nach einem der Ansprüche 5-8, **dadurch gekennzeichnet, dass** das Carboxylgruppen enthaltenden Reaktionsprodukt aus Neopentylglycol und/oder Trimethylolpropan als wesentliche alkoholische Komponente und aus Adipinsäure und/oder Terephthalsäure und/oder Isophthalsäure und/oder Trimellitsäure als wesentliche Säurekomponenten, hergestellt wurde.

10. Vergussmasse nach einem der Ansprüche 1-9, **dadurch gekennzeichnet, dass** die disperse Phase der Polysiloxandispersion zu etwa 0,1 bis 75 Gew.-% aus einem oder mehreren dreidimensional vernetzten Polyorganosiloxanen besteht, wobei die vernetzten Polyorganosiloxan-Teilchen einen mittleren Durchmesser von 0.02 µm bis 50 µm, vorzugsweise von 0.05 µm bis 10 µm, vorzugsweise von 0.07 µm bis 5 µm und vorzugsweise von 0.07 µm bis 1 µm aufweisen.

11. Vergussmasse nach einem der Ansprüche 1-10, **dadurch gekennzeichnet, dass** die Dispersion der Komponente a) gegebenenfalls bis zu 20 Gew.-% Additive enthält.

12. Vergussmasse nach einem der Ansprüche 1-11, **dadurch gekennzeichnet, dass** die dispergierten Polyorganosiloxanteilchen der Komponente a) an ihrer Oberfläche reaktive Gruppen aufweisen, über welche sie an das Epoxidharz oder an die Verbindung(en) der äusseren Phase chemisch angebunden werden können.

13. Vergussmasse nach einem der Ansprüche 1-12, **dadurch gekennzeichnet, dass** die Siliziumatome des quervernetzten Organopolysiloxan teilweise an organische einwertige, zweiwertige oder höherwertige Reste, welche gesättigt oder ungesättigt sein können und welche gegebenenfalls eine reaktive Gruppe tragen, gebunden sind.

14. vergussmasse nach einem der Ansprüche 1-13, **dadurch gekennzeichnet, dass** die Siliziumatome des quervernetzten Organopolysiloxans teilweise an einwertige Reste, die gleich oder verschieden sein können, und lineare oder verzweigte, gegebenenfalls chlorierte und/oder fluorierte Alkylgruppen mit 1 bis 8 C-Atomen, oder an (C₁-C₄)-Alkylaryl oder Aryl gebunden sind; vorzugsweise an gegebenenfalls fluoriertes Alkyl mit 1-4 C-Atomen oder Phenyl, vorzugsweise an 3,3,3-Trifluoropropyl, Monofluoromethyl, Difluoromethyl oder Alkyl mit 1-4 C-Atomen, vorzugsweise an Methyl oder Phenyl, vorzugsweise an Methyl.

15. Vergussmasse nach einem der Ansprüche 1-14, **dadurch gekennzeichnet, dass** der Substituent der Komponente (a), welcher eine reaktive Gruppe darstellt oder eine reaktive Gruppe trägt, der allgemeinen Formel (a):
-(A)ᵣ-(reaktive Gruppe) (a),
entspricht, worin
A einen zweiwertigen gesättigten oder ungesättigten alifatischen Rest, der ein oder mehrere Sauerstoffatome und/oder -NH-Gruppen oder Phenylen enthalten kann, einen zweiwertigen cycloalifatischen Rest, einen zweiwertigen aromatischen Rest, wobei jeweils an eine freie Valenz dieses zweiwertigen Restes eine reaktive Gruppe gebunden ist, und der Ausdruck "reaktive Gruppe" Wasserstoff, Vinyl oder Allyl, wobei diese Substituenten in der Regel direkt an das Siliziumatom gebunden sind (r = Null) oder Glycidyl, Hydroxy (-OH), Amino (-NH₂) und/oder Carboxyl, wobei Hydroxy direkt oder über den Linker A an das Silziumatom gebunden ist, bedeuten.

16. Vergussmasse nach einem der Ansprüche 1-15, **dadurch gekennzeichnet, dass** der Substituent Formel [(A)ᵣ-(reaktive Gruppe)] 3-Glycidoxypropyl, m-Aminophenyl, p-Aminophenyl, 3-(m-Aminophenoxy)propyl, 3-(2-Aminoethyl)aminopropyl oder Hydroxymethyl, vorzugsweise 3-Glycidoxypropyl, bedeutet.

17. Vergussmasse nach einem der Ansprüche 1-16, **dadurch gekennzeichnet, dass** die Komponente (b) eine fliessfähige Polyorganosiloxanverbindung darstellt, welche eine Viskosität im Bereich von 50 cSt bis 10'000 cSt, vorzugsweise im Bereich von 100 cSt bis 10'000 cSt und vorzugsweise im Bereich von 500 cSt bis 3'000 cSt, gemessen gemäss DIN 53 019 bei 20°C, aufweist.

18. Vergussmasse nach einem der Ansprüche 1-17, **dadurch gekennzeichnet, dass** die Komponente (b) eine cyclische Verbindung oder ein Gemisch cyclischer Verbindungen, der allgemeinen Formel (I) darstellt, welche aus 4 bis 8 -[Si(R)(R)O]- und/oder -[SiR₁(R₂)O]-Einheiten zusammengesetzt ist, und diese Verbindung pro Molekül mindestens 2 reaktive Gruppen aufweist.

19. Vergussmasse nach einem der Ansprüche 1-18, **dadurch gekennzeichnet, dass** die gegebenenfalls anwesende niedermolekulare oligomere Siloxanverbindung eine Verbindung darstellt, welche (i) aus -[Si(R)(R)O]- Einheiten, welche endständig -OSi(R)₃-Gruppen bzw. -Si(R)₃-Gruppen aufweisen, zusammen gesetzt ist oder (ii) eine cyclische Verbindungen der Formel [Si(R)(R)O]ₜ darstellt, worin t eine ganze Zahl von 4 bis 12, vorzugsweise 4 bis 8 bedeutet und diese niedermolekulare oligomere Siloxanverbindung keine reaktiven Gruppen aufweist.

20. Vergussmasse nach einem der Ansprüche 1-19, **dadurch gekennzeichnet, dass** die Summe der Komponente (a) und der Komponente (b) bezogen auf die gesamte Menge der Vergussmasse 0.1 Gew.-% bis 30 Gew.-%, vorzugsweise 0,5 Gew.-% bis 10 Gew.-% und insbesondere etwa 2 bis 5 Gew.-%, beträgt

21. Vergussmasse nach einem der Ansprüche 1-20, **dadurch gekennzeichnet, dass** das Gewichtsverhältnis der Komponente (a) zur Komponente (b) im Bereich von 5:1 bis 1:5, vorzugsweise im Bereich von 5:1 bis 2:1, liegt und vorzugsweise etwa 4,4:1 beträgt.

22. Vergussmasse nach einem der Ansprüche 1-21, **dadurch gekennzeichnet, dass** die Menge der niedermolekulare oligomere Siloxanverbindung 0.1 Gew.-% bis 10 Gew.-%, vorzugsweise 0,5 Gew.-% bis 5 Gew.-% und insbesondere etwa 1 Gew.-%, bezogen auf das Gesamtgewicht der Mischung, beträgt.

23. Vergussmasse nach einem der Ansprüche 1-22, **dadurch gekennzeichnet, dass** diese mindestens einen Füllstoff enthält, vorzugsweise Quarzmehl, Aluminiumoxid und/oder Dolomite in verschiedenen an sich bekannten Mahlungen, vorzugsweise mit einer Silanisierung versehen.

24. Verfahren zur Herstellung einer Vergussmasse nach einem der Ansprüche 1-23, **dadurch gekennzeichnet, dass** man die Basiskomponenten des härtbaren Epoxidharzes (d.i. Epoxidharz, den Härter, den gegebenenfalls anwesenden Beschleuniger sowie die weiteren Additive) in beliebiger Reihenfolge mischt und der erhaltenen Mischung vor, während oder anschliessend an die Vermischung, das dreidimensional vernetzte Polysiloxan in disperser Form [Komponente (a)], die ausgewählte lineare oder verzweigte reaktive Gruppen enthaltende Siloxanverbindung [Komponente (b)],sowie gegebenenfalls die niedermolekulare oligomere Siloxanverbindung [die Komponente (c)], zusetzt.

25. Verfahren zur Herstellung einer Vergussmasse nach einem der Ansprüche 1-23, **dadurch gekennzeichnet, dass** man zumindest einen Teil der Epoxidgruppen enthaltenden Komponenten (a) und (b) mit dem Härter vormischt und vorhärtet oder zumindest einen Teil der Hydroxyl, Amino oder Carboxyl enthaltenden Komponenten (a) und (b) mit dem Epoxidharz vormischt und gegebenenfalls vorhärtet.

26. Verwendung einer Vergussmasse nach einem der Ansprüche 1-23 als Konstruktionswerkstoff als auch als Isoliermaterial, insbesondere für die Herstellung von Formteilen und Beschichtungen auf dem Gebiet der elektrischen Isolierungen, für die Herstellung von Hochspannungsisolierung für den Freilufteinsatz, für die Herstellung von Freiluftisolatoren bei Hochspannungsleitungen als Langstab-, Verbund- und Kappenisolatoren, für Stützisolatoren im Mittelspannungsbereich, in der Herstellung Isolierungen bei Freiluft-Leistungschaltern, Messwandlern, Durchführungen und Ableitern, im Schaltanlagenbau, in Leistungsschaltern, Trockentransformatoren und elektrischen Maschinen, als Beschichtungsmaterialien für Transistoren und andere Halbleiterelemente, zum Imprägnieren von elektrischen Bauteilen, als Korrosionsschutz für metallische Bauteile.

27. Die aus den erfindungsgemässen Vergussmasse gemäss einem der Ansprüche 1 bis 23 hergestellten Konstruktionsteile und elektrischen Isolierungen.

## Claims

1. Bulk-modified potting composition based on a curable epoxy resin or on a mixture of these resins, where the resin or the mixture is composed of an epoxy resin, a hardener, where appropriate an accelerator, and also other additives, such as fillers, flexibilizers, and colorants, **characterized in that** this potting composition comprises:
(a) a three-dimensionally crosslinked polysiloxane in disperse form and with a particle size in the range from 0.02 µm to 50 µm, which, where appropriate, has reactive groups which can react chemically with the epoxy resin and/or the hardener, and (b) a linear, branched or cyclic polysiloxane compound which has at least two reactive groups which can react chemically with the epoxy resin and/or the hardener, and this polysiloxane compound of component (b) is a compound, or a mixture of compounds, of the general formula (I): 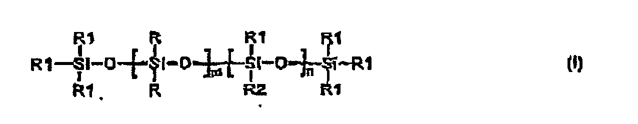 where
R are, independently of one another, a linear, branched or cyclic, where appropriate chlorinated and/or fluorinated, alkyl radical having from 1 to 8 carbon atoms, (C₁-C₄)-alkylaryl, or aryl; preferably an unfluorinated or fluorinated alkyl radical having from 1 to 4 carbon atoms, or phenyl; preferably phenyl, 3,3,3-trifluoropropyl, monofluoromethyl, difluoromethyl, or alkyl having from 1 to 4 carbon atoms; preferably methyl;
R₁ are, independently of one another, as defined for R or R₂, where two terminal substituents R₁ bonded to different Si atoms represent, where appropriate, an oxygen atom (= cyclic compound);
R₂ is as defined for R or is a -(A)ᵣ-(reactive group) radical, R=zero or 1, A (for r=1) is a divalent saturated or unsaturated aliphatic radical which may contain one or more oxygen atoms and/or -NH- groups, or phenylene, or is a divalent cycloaliphatic radical, or a divalent aromatic radical, where in each case a reactive group has been bonded to a free valency of this divalent radical, and the term "reactive group" means hydrogen, vinyl, or allyl, the substituents generally having been bonded directly to the silicon atom (r - zero), or glycidyl, hydroxy (-OH), amino (-NH₂), and/or carboxy, where hydroxy has bonded directly or by way of the linker A to the silicon atom,
m has an average of from 0 to 5000, preferably from 20 to 5000, preferably from 50 to 1500;
n has an average of from 0 to 100, preferably from 2 to 100, preferably from 2 to 20;
where (i) the compound of the formula (I) has at least two reactive groups per molecule, (ii) the total [m+n] for non-cyclic compounds is at least 20, preferably at least 50, and component (b) is a cyclic compound or a mixture of cyclic compounds, of the general formula (I), which is composed of 4-12 -[Si(R)(R)O]- and/or -[SiR₁(R₂)O]- units, this compound having at least two reactive groups per molecule and (iii) the arrangement of the -[Si(R)(R)O]-and -[Si(R₁)(R₂)O]- groups in the molecule is in any desired sequence.

2. Potting composition according to Claim 1, **characterized in that** the three-dimensionally crosslinked polysiloxane [component (a)] was prepared separately in the form of a polysiloxane dispersion composed of an external phase and a dispersed phase, and was added to the epoxy potting composition or to a component of the same prior to its curing.

3. Potting composition according to Claim 2, **characterized in that** the external phase of the polysiloxane dispersion is composed of from about 25 to 99.9% by weight of a polyol which is polymeric or monomeric and liquid at temperatures of from 20°C to 100°C, of a linear or branched polyglycol ether, of a polyester based on polyols and aliphatic, cycloaliphatic, or aromatic dicarboxylic acids, of acrylate polymers or methacrylate polymers, or else corresponding copolymers, or of a mixture of compounds of this type.

4. Potting composition according to Claim 3, **characterized in that** the external phase is composed of at least one linear or branched aliphatic polyol, preferably ethylene glycol, diethylene glycol, a propylene glycol, a butylene glycol, 1,2-butanediol, 1,3-butanediol, 1,4-butanediol, neopentyl glycol, isopentyl glycol, 1,6-hexanediol, glycerol, hexanetriol, trimethylolethane, trimethylolpropane, erythritol, pentaerythritol, cyclohexanediol, or 1,4-dimethylolcyclohexane.

5. Potting composition according to Claim 4, **characterized in that** the external phase is composed of at least one reaction product derived from a polyol according to Claim 4 with aliphatic, cycloaliphatic, or aromatic dicarboxylic acids or tricarboxylic acids, these being suitable for the use as hardener in epoxy potting compositions.

6. Potting composition according to Claim 5, **characterized in that** these reaction products containing carboxy groups or polyesters containing carboxy groups have an acid value (given in mg KOH/g of polyester) of from 10 to 100.

7. Potting composition according to Claim 5, **characterized in that** these reaction products containing carboxy groups or polyesters containing carboxy groups have a glass transition temperature in the range from 20 to 100°C.

8. Potting composition according to any of Claims 5 to 7, **characterized in that** these reaction products containing carboxy groups or polyesters containing carboxy groups are a condensation product of a polyol according to Claim 5 and of a dicarboxylic acid and/or of a polyfunctional carboxylic acid, or of the corresponding carboxylic anhydrides, preferably selected from the group consisting of isophthalic acid, terephthalic acid, phthalic acid, methylphthalic acids, tetrahydrophthalic acid, hexahydrophthalic acid, methyltetrahydrophthalic acids, preferably 4-methyltetrahydrophthalic acid, cyclohexanedicarboxylic acids, succinic acid, glutaric acid, adipic acid, pimelic acid, suberic acid, azelaic acid, sebacic acid, dodecanedicarboxylic acid, fumeric acid, maleic acid, and 4,4'-biphenyldicarboxylic acid.

9. Potting composition according to any of Claims 5 to 8, **characterized in that** the reaction product containing carboxy groups was prepared from neopentyl glycol and/or trimethylolpropane as substantive alcohol component and from adipic acid and/or terephthalic acid and/or isophthalic acid and/or trimellitic acid as substantive acid component.

10. Potting composition according to any of Claims 1 to 9, **characterized in that** the disperse phase of the polysiloxane dispersion is composed of from about 0.1 to 75% by weight of one or more three-dimensionally crosslinked polyorganosiloxanes, where the crosslinked polyorganosiloxane particles have an average diameter of from 0.02 µm to 50 µm, preferably from 0.05 µm to 10 µm, preferably from 0.07 µm to 5 µm, and preferably from 0.07 µm to 1 µm.

11. Potting composition according to any of Claims 1 to 10, **characterized in that** the dispersion of the component (a) comprises, where appropriate, up to 20% by weight of additives.

12. Potting composition according to any of Claims 1 to 11, **characterized in that** the dispersed polyorganosiloxane particles of component (a) have, at their surface, reactive groups by way of which they can be chemically bonded to the epoxy resin or to the compound(s) of the external phase.

13. Potting composition according to any of Claims 1 to 12, **characterized in that** some of the silicon atoms of the three-dimensionally crosslinked organopolysiloxane have been bonded to organic radicals which are monovalent, divalent, or have higher valency, and which may be saturated or unsaturated, and which, where appropriate, bear a reactive group.

14. Potting composition according to any of Claims 1 to 13, **characterized in that** some of the silicon atoms of the three-dimensionally crosslinked organopolysiloxane have bonding to monovalent radicals, which may be identical or different, where appropriate to linear or branched, where appropriate chlorinated and/or fluorinated alkyl groups having from 1 to 8 carbon atoms, or to (C₁-C₄)-alkylaryl or aryl; preferably to unfluorinated or fluorinated alkyl having from 1 to 4 carbon atoms or phenyl, preferably to 3,3,3-trifluoropropyl, monofluoromethyl, difluoromethyl, or alkyl having from 1 to 4 carbon atoms, preferably to methyl or phenyl, preferably to methyl.

15. Potting composition according to any of Claims 1 to 14, **characterized in that** the substituent of component (a) which is a reactive group or bears a reactive group has the general formula (a):
-(A)ᵣ-(reactive group) (a),
where
A is a divalent saturated or unsaturated aliphatic radical which may contain one or more oxygen atoms and/or -NH- groups, or phenylene, or is a divalent cycloaliphatic radical, or a divalent aromatic radical, where in each case a reactive group has been bonded to a free valency of this divalent radical, and the term "reactive group" means hydrogen, vinyl, or allyl, the substituents generally having been bonded directly to the silicon atom (r - zero), or glycidyl, hydroxy (-OH), amino (-NH₂), and/or carboxy, where hydroxy has bonded directly or by way of the linker A to the silicon atom.

16. Potting composition according to any of Claims 1 to 15, **characterized in that** the formula [(A)ᵣ-(reactive group)] substituent is 3-glycidoxypropyl, m-aminophenyl, p-aminophenyl, 3-(m-aminophenoxy)propyl, 3-(2-aminoethyl)aminopropyl or hydroxymethyl, preferably 3-glycidoxypropyl.

17. Potting composition according to any of Claims 1 to 16, **characterized in that** component (b) is a flowable polyorganosiloxane compound whose viscosity is in the range from 50 cSt to 10,000 cSt, preferably in the range from 100 cSt to 10,000 cSt, and preferably in the range from 500 cSt to 3000 cSt, measured to DIN 53 019 at 20°C.

18. Potting composition according to one of Claims 1-17, **characterized in that** component (b) is a cyclic compound or a mixture of cyclic compounds, of the general formula (I), which is composed of 4 to 8 -[Si(R) (R)O]- and/or -[SiR₁(R₂)O]- units, this compound having at least two reactive groups per molecule.

19. Potting composition according to any of Claims 1 to 18, **characterized in that** the low-molecular-weight oligomeric siloxane compound present where appropriate is a compound which (i) is composed of -[Si(R)(R)O]- units which have terminal -OSi(R)₃groups or terminal -Si(R)₃ groups, or (ii) is a cyclic compound of the formula [Si(R)(R)O]ₜ, where t is an integer from 4 to 12, preferably from 4 to 8, this low-molecular-weight oligomeric siloxane compound having no reactive groups.

20. Potting composition according to any of Claims 1 to 19, **characterized in that** the entirety of component (a) and of component (b) amounts to from 0.1% by weight to 30% by weight, preferably from 0.5% by weight to 10% by weight, and in particular from about 2 to 5% by weight, based on the total amount of the potting composition.

21. Potting composition according to any of Claims 1 to 20, **characterized in that** the ratio by weight of component (a) to component (b) is in the range from 5:1 to 1:5, preferably in the range from 5:1 to 2:1, and is preferably about 4.4:1.

22. Potting composition according to any of Claims 1 to 21, **characterized in that** the amount of the low-molecular-weight oligomeric siloxane compound is from 0.1% by weight to 10% by weight, preferably from 0.5% by weight to 5% by weight, and in particular about 1% by weight, based on the total weight of the mixture.

23. Potting composition according to any of Claims 1 to 22, **characterized in that** it comprises at least one filler, preferably powdered quartz, aluminium oxide, and/or dolomites ground to various sizes known per se, preferably silanized.

24. Process for preparing a potting composition according to any of Claims 1 to 23, **characterized in that** the underlying components of the curable epoxy resin (i.e. epoxy resin, the hardener, the accelerator present where appropriate, and also the other additives) are mixed in any desired sequence and, prior to, during or following the mixing process, the resultant mixture is treated with the three-dimensionally crosslinked polysiloxane in disperse form [component (a)], the selected linear or branched siloxane compound containing reactive groups [component (b)], and also, where appropriate, the low-molecular-weight oligomeric siloxane compound [component (c)].

25. Process for preparing a potting composition according to any of Claims 1 to 23, **characterized in that** at least part of the components (a) and (b) containing epoxy groups is premixed with the hardener, and the mixture is pre-cured, or at least part of the components (a) and (b) containing hydroxy, amino, or carboxy is premixed with the epoxy resin, and the mixture is pre-cured.

26. Use of the potting composition according to any of Claims 1 to 23 as an engineering material or else as an insulating material, in particular for the production of mouldings and coatings in the electrical insulation sector, for the production of high-voltage insulation for outdoor use, for the production of outdoor insulators for high-voltage lines, these being longitudinal rod insulators, composite insulators, or cap-tight insulators, for post insulators in the medium-voltage sector, in the production of insulators for outdoor power switches, measurement transducers, feed-throughs, and suppressors, in switch gear construction, in power switches, dry-type transformers and electrical machines, or as coating materials for transistors and other semiconductor elements, or for impregnating electrical components, or as corrosion protection for metallic components.

27. Electrical insulation and engineering components produced from the potting composition of the invention according to any of Claims 1 to 23.

## Revendications

1. Compound modifié en volume à base d'une résine époxyde durcissable ou d'un mélange de telles résines, laquelle/lesquelles est/sont constituée(s) d'une résine époxyde, d'un durcisseur, le cas échéant d'un accélérateur ainsi que d'autres additifs tels que des charges, des flexibilisateurs et des colorants, **caractérisé en ce que** ce compound contient:
(a) un polysiloxane réticulé sous forme dispersée et avec une taille de particules dans une plage de 0,02 µm jusqu'à 50 µm, lequel le cas échéant présente des groupements réactifs qui peuvent réagir chimiquement avec la résine époxyde et/ou le durcisseur, et (b) un composé polysiloxane linéaire, ramifié ou cyclique, lequel présente au moins deux groupements réactifs qui peuvent réagir chimiquement avec la résine époxyde et/ou le durcisseur, ce composé polysiloxane du composé
(b) représente un composé, respectivement un mélange de composés, de formule générale (I) : 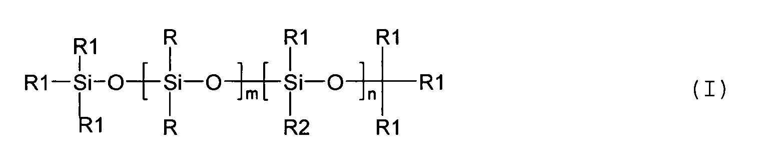
dans laquelle :
R signifie indépendamment les uns des autres un radical alkyle linéaire, ramifié ou cyclique, le cas échéant chloré et/ou fluoré, avec de 1 à 8 atomes de carbone, un (alkyle en C₃-C₄) aryle ou un aryle; de préférence un radical alkyle, le cas échéant fluoré, avec de 1 à 4 atomes de carbone ou un phényle; de préférence un phényle, un 3,3,3-trifluoropropyle, un monofluorométhyle, un difluorométhyle ou un alkyle avec de 1 à 4 atomes de carbone, de préférence un méthyle ;
R₁ signifie indépendamment les uns des autres une des significations de R ou de R₂ où le cas échéant deux substituants terminaux R₁ liés à différents atomes de Si sont réunis ensemble et signifient un atome d'oxygène (= composé cyclique) ;
R₂ signifie une des significations de R ou un radical - (A)ᵣ-(groupement réactif), R=zéro ou 1,
A (pour r=1) signifie un radical aliphatique divalent saturé ou insaturé qui peut contenir un ou plusieurs atomes d'oxygène et/ou des groupements -NH- ou un phénylène, un radical cycloaliphatique divalent, un radical aromatique divalent dans lequel une valence libre de ce radical divalent est chaque fois liée à un groupement réactif, et l'expression « groupement réactif » signifie un hydrogène, un vinyle ou un allyle, ces substituants étant en règle générale liés directement à l'atome de silicium (r = zéro), ou un glycidyle, un hydroxy (-OH), une amine (-NH₂) et/ou un carboxyle, l'hydroxy étant lié directement ou par le lieur A à l'atome de silicium,
m signifie en moyenne de zéro jusqu'à 5.000, de préférence de 20 jusqu'à 5.000, de préférence de 50 jusqu'à 1.500 ;
n signifie en moyenne de zéro jusqu'à 100, de préférence de 2 jusqu'à 100, de préférence de 2 jusqu'à 20 ;
où (i) le composé de la formule (I) présente au moins deux groupements réactifs par molécule, (ii) la somme de [m+n] pour des composés non cycliques s'élève au moins à 20, de préférence au moins à 50 et le composant (b) représente un composant cyclique ou un mélange de composés cycliques qui possède(nt) la formule (I) laquelle est composée par 4-12 unités -[Si(R)(R)O]-et/ou -[Si(R₁)(R₂)O] et ce composé présente au moins deux groupements réactifs par molécule et (iii) les groupements -[Si(R)(R)O]- et -[Si(R₁)(R₂)O] sont ordonnés de manière quelconque dans la molécule.

2. Compound selon la revendication 1,
**caractérisé en ce que** le polysiloxane réticulé tridimensionnellement [composant (a)] a été produit séparément en tant que dispersion de polysiloxane, composée d'une phase externe et d'une phase dispersée et a été ajouté au compound à base d'époxyde ou à un composant de celui-ci avant son durcissement.

3. Compound selon la revendication 2,
**caractérisé en ce que** la phase externe de la dispersion de polysiloxane est constituée d'environ 25 jusqu'à 99,9% en poids d'un polyol monomère ou polymère liquide à des températures de 20°C à 100°C, d'un polyglycoléther linéaire ou ramifié, d'un polyester à base de polyols et d'acides dicarboxyliques aliphatiques, cycloaliphatiques ou aromatiques, de polymères d'acrylate ou de polymères de méthacrylate ainsi que des copolymères correspondants, ou d'un mélange de tels composés.

4. Compound selon la revendication 3,
**caractérisé en ce que** la phase externe est constituée au moins d'un polyol aliphatique linéaire ou ramifié, de préférence de l'éthylèneglycol, du diéthylèneglycol, d'un propylèneglycol, d'un butylèneglycol, du 1,2-butanediol, du 1,3-butanediol, du 1,4-butanediol, du néopentylglycol, de l'isopentylglycol, du 1,6-hexanediol, du glycérol, de l'hexanetriol, du triméthyloléthane, du triméthylolpropane, de l'érythrite, de la pentaérythrite, du cyclohexanediol ou du 1,4-diméthylolcyclohexane.

5. Compound selon la revendication 4,
**caractérisé en ce que** la phase externe est constituée d'au moins un produit de réaction d'un polyol selon la revendication 4 avec des acides dicarboxyliques aliphatiques, cycloaliphatiques ou aromatiques ou des acides tricarboxyliques qui sont appropriés à l'utilisation en tant que durcisseur dans des compounds à base d'époxyde.

6. Compound selon la revendication 5,
**caractérisé en ce que** ces produits de réaction comprenant des groupements carboxyliques, respectivement polymères polyesters, présentent un indice d'acidité (donné en mg KOH/g de polyester) de 10 à 100.

7. Compound selon la revendication 5,
**caractérisé en ce que** ces produits de réaction comprenant des groupements carboxyliques, respectivement polymères polyesters, présentent une température de transition vitreuse dans la plage de 20 jusqu'à 100°C.

8. Compound selon l'une quelconque des revendications 5-7, **caractérisé en ce que** ces produits de réaction comprenant des groupements carboxyliques, respectivement polymères polyesters, représentent un produit de condensation d'un polyol selon la revendication 5 et d'un acide dicarboxylique et/ou d'un acide carboxylique polyfonctionnel ou des anhydrides d'acide carboxylique correspondants, de préférence choisi(s) parmi le groupe comprenant l'acide isophtalique, l'acide téréphtalique, l'acide phtalique, les acides méthylphtaliques, l'acide tetrahydrophtalique, l'acide hexahydrophtalique, les acides méthyltétrahydrophtaliques, de préférence l'acide 4-méthyltétrahydrophtalique, les acides cyclohexanedicarboxyliques, l'acide succinique, l'acide glutarique, l'acide adipique, l'acide pimélique, l'acide subérique, l'acide azéalinique, l'acide sébacique, l'acide dodécanedicarboxylique, l'acide fumarique, l'acide maléique ou l'acide 4,4'-diphényldicarboxylique.

9. Compound selon l'une quelconque des revendications 5-8, **caractérisé en ce que** le produit de réaction contenant les groupements carboxyliques a été préparé à partir de néopentylglycol et/ou de triméthylolpropane en tant que composant alcoolique principal et à partir d'acide adipique et/ou d'acide téréphtalique et/ou d'acide isophtalique et/ou d'acide trimellitique en tant que composants acides principaux.

10. Compound selon l'une quelconque des revendications 1-9, **caractérisé en ce que** la phase dispersée de la dispersion de polysiloxane est constituée d'environ 0,1 à 75% en poids d'un ou plusieurs polyorganosiloxanes réticulés tridimensionnellement dans laquelle les particules de polyorganosiloxane réticulé présentent un diamètre moyen de 0,02 µm à 50 µm, de préférence de 0,05 µm à 10 µm, de préférence de 0,07 µm à 5 µm et de préférence de 0,07 µm à 1 µm.

11. Compound selon l'une quelconque des revendications 1-10, **caractérisé en ce que** la dispersion du composant a) contient le cas échéant jusqu'à 20% en poids d'additifs.

12. Compound selon l'une quelconque des revendications 1-11, **caractérisé en ce que** les particules de polyorganosiloxane dispersées du composant a) présentent des groupements réactifs à leur surface par lesquels elles peuvent se lier chimiquement à la résine époxyde ou au(x) composé(s) de la phase externe.

13. Compound selon l'une quelconque des revendications 1-12, **caractérisé en ce que** les atomes de silicium du polyorganosiloxane réticulé transversalement sont liés partiellement à des radicaux organiques mono- , di- ou multivalents, lesquels peuvent être saturés ou insaturés et lesquels le cas échéant portent un groupement réactif.

14. Compound selon l'une quelconque des revendications 1-13, **caractérisé en ce que** les atomes de silicium du polyorganosiloxane réticulé transversalement sont partiellement liés à des radicaux monovalents qui peuvent être identiques ou différents, et à des groupements alkyle linéaires ou ramifiés, le cas échéant chlorés ou/et fluorés avec de 1 à 8 atomes de C, ou à un (alkyle en C₁-C₄) aryle ou à un aryle ; de préférence à un alkyle le cas échéant fluoré avec 1-4 atomes de C ou à un phényle, de préférence à un 3,3,3-trifluoropropyle, à un monofluorométhyle, à un difluorométhyle ou à un alkyle avec 1-4 atomes de C, de préférence à un méthyle ou à un phényle, de préférence à un méthyle.

15. Compound selon l'une quelconque des revendications 1-14, **caractérisé en ce que** le substituant du composant (a) qui représente un groupement réactif ou qui porte un groupement réactif, correspond à la formule générale (a) :
- (A)ᵣ-(groupement réactif) (a)
dans laquelle A signifie un radical aliphatique divalent saturé ou insaturé qui peut contenir un ou plusieurs atomes d'oxygène et/ou des groupements -NH- ou un phénylène, un radical cycloaliphatique divalent, un radical aromatique divalent dans lequel une valence libre de ce radical divalent est chaque fois liée à un groupement réactif, et l'expression « groupement réactif » signifie un hydrogène, un vinyle ou un allyle, ces substituants étant en règle générale liés directement à l'atome de silicium (r = zéro), ou un glycidyle, un hydroxy (-OH), une amine (-NH₂) et/ou un carboxyle, l'hydroxy étant lié directement ou par le lieur A à l'atome de silicium.

16. Compound selon l'une quelconque des revendications 1-15, **caractérisé en ce que** le substituant de formule [(A)ᵣ-(groupement réactif)] signifie 3-glycidoxypropyle, m-aminophényle, p-aminophényle, 3-(m-aminophénoxy)propyle, 3-(2-aminoéthyl)àminopropyle ou hydroxyméthyle, de préférence 3-glycidoxypropyle.

17. Compound selon l'une quelconque des revendications 1-16, **caractérisé en ce que** le composé (b) représente un composé polyorganosiloxane coulable qui présente une viscosité dans la plage de 50 cSt jusqu'à 10.000 cSt, de préférence dans la plage de 100 cSt jusqu'à 10.000 cSt et de préférence dans la plage de 500 cSt à 3000 cSt, mesurée selon DIN 53 019 à 20°C.

18. Compound selon l'une quelconque des revendications 1-17, **caractérisé en ce que** le composant (b) représente un composé cyclique ou un mélange de composés cycliques qui possède(nt) la formule (I) laquelle est composée par 4 à 8 unités -[SiCR)(R)O]-et/ou -[SiR₁(R₂)O]- et ce composé présente au moins deux groupements réactifs par molécule.

19. Compound selon l'une quelconque des revendications 1-18, **caractérisé en ce que** le composé à base de siloxane oligomère de faible poids moléculaire présent le cas échéant, représente un composé qui est composé (i) d'unités -[Si(R)(R)O]-, lesquelles présentent des groupements terminaux -OSi(R)₃- respectivement -Si(R)₃- ou (ii) représente un composé cyclique de formule [Si(R)(R)O]ₜ, dans laquelle t signifie un nombre entier de 4 jusqu'à 12, de préférence de 4 jusqu'à 8 et ce composé à base de siloxane oligomère de faible poids moléculaire ne présente aucun groupement réactif.

20. Compound selon l'une quelconque des revendications 1-19, **caractérisé en ce que** la somme du composant (a) et du composant (b) ramenée à la quantité totale de compound s'élève à 0,1% en poids jusqu'à 30% en poids, de préférence à 0,5% en poids jusqu'à 10% en poids et en particulier à environ 2 jusqu'à 5% en poids.

21. Compound selon l'une quelconque des revendications 1-20, **caractérisé en ce que** le rapport en poids du composant (a) au composant (b) est dans la plage de 5 :1 jusqu'à 1 :5, de préférence dans la plage de 5 :1 jusqu'à 2 :1 et s'élève de préférence à environ 4,4 :1.

22. Compound selon l'une quelconque des revendications 1-21, **caractérisé en ce que** la quantité de composé à base de siloxane oligomère de faible poids moléculaire s'élève à 0,1% en poids jusqu'à 10% en poids, de préférence à 0,5% en poids jusqu'à 5% en poids et en particulier à environ 1% en poids, rapporté au poids total du mélange.

23. Compound selon l'une quelconque des revendications 1-22, **caractérisé en ce que** celui-ci contient au moins une charge, de préférence de la farine de quartz, de l'oxyde d'aluminium et/ou de la dolomite en différentes moutures connues, de préférence ayant subi une silanisation.

24. Procédé de préparation d'un compound selon l'une quelconque des revendications 1-23, **caractérisé en ce qu'**on mélange les composants de base de la résine époxyde durcissable (c'est-à-dire la résine époxyde, le durcisseur, les accélérateurs présents le cas échéant ainsi que les autres additifs) dans un ordre quelconque et on ajoute au mélange obtenu avant, pendant ou à la fin du mélange, le polysiloxane réticulé tridimensionnellement sous forme dispersée [composant (a)], le composant à base de siloxane contenant les groupements réactifs linéaires ou ramifiés choisis [composant (b)] ainsi qu'éventuellement le composé à base de siloxane oligomère de faible poids moléculaire [le composant (c)].

25. Procédé de préparation d'un compound selon l'une quelconque des revendications 1-23, **caractérisé en ce qu'** au minimum une partie des composants (a) et (b) contenant des groupements époxyde est prémélangée avec le durcisseur et prédurcie ou au moins une partie des composants (a) et (b) contenant un hydroxyle, une amine ou un carboxyle est prémélangée avec la résine époxyde et est le cas échéant prédurcie.

26. Utilisation d'un compound selon l'une quelconque des revendications 1-23 comme matériau de construction ainsi que comme matériau isolant, en particulier pour la fabrication de pièces façonnées et de revêtements dans le domaine des isolations électriques, pour la fabrication d'isolation pour haute tension à utiliser à l'extérieur, pour la fabrication d'isolateurs d'extérieur pour conducteurs haute tension en tant qu'isolateurs à long fût, isolateurs composites et isolateurs à capot et tige, pour des isolateurs supports dans le domaine des moyennes tensions, dans la fabrication d'isolations d'interrupteurs de puissance d'extérieur, de transformateurs de mesure, de traversées et de parafoudres, dans la construction d'installations de distribution, dans les interrupteurs de puissance, les transformateurs à sec et les machines électriques, comme matériaux de revêtement pour transistors et autres éléments semi-conducteurs, pour l'imprégnation de pièces électriques, comme protection contre la corrosion pour des pièces métalliques.

27. Pièces de construction et isolations électriques produites à partir des compounds de l'invention selon l'une quelconque des revendications de 1 à 23.
